# EUROPÄISCHE PATENTSCHRIFT

(11) **EP 0 595 200 B1**
(45) Veröffentlichungstag und Bekanntmachung des Hinweises auf die Patenterteilung: **19.11.1997**
(21) Anmeldenummer: 93117064.1
(22) Anmeldetag: 21.10.1993
(51) Int. Cl.: B29C 45/17

(54) **Kupplungseinrichtung an einer Kunststoff-Spritzgiessmachine**
Coupling decive for a plastic injection moulding machine
Dispositif de couplage pour une machine de moulage de matières plastiques par injection

(30) Priorität: 28.10.1992 DE 4236282
(43) Veröffentlichungstag der Anmeldung: 04.05.1994
(73) Patentinhaber: Hehl, Karl, 72290 Lossburg (DE)
(72) Erfinder: Hehl, Karl, 72290 Lossburg (DE)
(74) Vertreter: Frank, Gerhard, Dipl.-Phys.

(56) Entgegenhaltungen:
- EP-A- 0 202 433
- EP-A- 0 454 991
- EP-A- 0 548 704
- DE-C- 4 142 927

## Beschreibung

Die Erfindung betrifft eine Kupplungseinrichtung an einer KunststoffSpritzgießmaschine nach dem Oberbegriff des Anspruches 1.

Eine derartige Kupplungseinrichtung ist aus der DE-PS 35 28 154 bekannt. Bei dieser Kupplungseinrichtung wird eine Rotation eines Rotationsmotors auf eine Spindel übertragen, die diese Rotation ihrerseits auf die Förderschnecke überträgt. Zur Kupplung von Förderschnecke und Spindel sind eine Radialkupplung für die Drehmomentübertragung und eine Axialverriegelung vorgesehen, die die Förderschnecke für die beim Spritzzyklus erforderlichen axialen Bewegungen mitnimmt. Als Axialverriegelung sind zwei diametral angeordnete Schieber vorgesehen, die über einen radial eingreifenden Spreizkeil außer Kupplungsstellung gebracht werden können. Die Spindel ist dabei von einem Mitnahmestift durchdrungen, der eine Mitnahme des Mitnehmerrings des die Schieber aufnehmenden Schiebergehäuses bei der Rotation gewährleistet. Der Mitnahmestift ist jedoch so angeordnet, daß er und damit das Schiebergehäuse nur nach Demontage der Trägerbrücke abgenommen werden kann, so daß umfangreiche Montagearbeiten erforderlich sind, um beispielsweise an die Lager von Spindel und Antriebswelle zu gelangen.

Aus der DE-PS 37 35 701 ist eine automatisierbare Kupplungseinrichtung bekannt, bei der zur Kupplung der Förderschnecke ein rotierbarer Schieber mittels eines Deckels in einem Mitnahmestück festgelegt ist, das auf die Spindel des Rotationsmotors geschraubt ist. In der Praxis hat sich jedoch herausgestellt, daß diese Gewindeverbindung beim Spritzbetrieb die beiden verbundenen Teile so fest aufeinanderdrückt, daß sie nur mit Mühe wieder voneinander zu lösen sind.

Aus der DE-PS 32 29 223 sind weiter Kupplungseinrichtungen bekannt, die zum Austausch der Lager für die Spindel des Rotationsmotors stets einen Ausbau der Spindel erforderlich machen.

Ausgehend von diesem Stand der Technik liegt der Erfindung die Aufgabe zugrunde, eine Kupplungseinrichtung der eingangs genannten Art derart weiterzubilden, daß trotz einfacher Konstruktion eine wartungsfreundliche und kostengünstige Kupplungseinrichtung geschaffen wird.

Diese Aufgabe wird durch die Merkmale des Anspruches 1 gelöst.

Die Kupplungseinrichtung wird dabei so ausgebildet, daß die Aufnahme für die Axialverriegelung leicht abgenommen werden kann. Dadurch ist es aber möglich, die für eine Wartung erforderliche Zeit auf ein Minimum zu reduzieren. Das Wartungspersonal muß lediglich die Gewindebolzen lösen, die beim Spritzbetrieb hauptsächlich axial beansprucht sind und insofern nicht infolge der Rotation zu einer Verfestigung der Gewindeverbindung neigen. Dadurch werden aber die grundsätzlichen Voraussetzungen dafür geschaffen, nach Abnahme der Aufnahme für die Axialverriegelung durch einfachste Mittel die Lager für die Spindel auszutauschen. Es ist nicht mehr erforderlich, die gesamte Einspritzbrücke zu demontieren, um lediglich ein Lager zu wechseln, sondern das Wartungspersonal kann vielmehr das für die Wartung erforderliche Werkzeug in einer Aktentasche mitführen. Da eine schnelle Wartung aber auch die Zufriedenheit des Kunden erhöht und die Anordnung mittels einiger Gewindebolzen auch die Montage im Herstellerbetrieb erleichtert, wird der dafür zu treibende Aufwand von schräg in eine Welle eintauchenden Gewindebohrungen gerne in Kauf genommen.

Bei einer Ausbildung nach Anspruch 2 werden zudem die grundsätzlichen Voraussetzungen für eine Automatisierung der Kupplung dadurch geschaffen, daß die Aufnahme grundsätzlich aus der Einspritzbrücke hervorragt. In diesem Bereich können aber automatische Betätigungsmechanismen problemlos untergebracht werden.

Bei einer Ausbildung nach den Ansprüchen 5-7 wird trotz einfacher Montage an der Stirnseite der Spindel eine sichere Betätigung der Axialverriegelung sichergestellt. Auch hier wird bereits durch die Anordnung der Federn eine spätere Automatisierung vorbereitet, da das Entkuppeln stets gegen die Kraft der Federn erfolgt.

Eine Ausbildung nach den Ansprüchen 8 und 9 ermöglicht schließlich einen einfachen Zugang zu Verschleißteilen wie Lagern, wobei dennoch aufgrund der Ausbildung nach Anspruch 8 ein Schutz gegen Verschmutzung gewährleistet ist.

Weitere Vorteile ergeben sich aus den Unteransprüchen. Im folgenden wird die Erfindung anhand der Zeichnungen an einem Ausführungsbeispiel erläutert. Es zeigen:
- Fig. 1: eine Draufsicht auf eine Spritzgießeinheit mit einer Kupplungseinrichtung,
- Fig. 2: einen vergrößerten, teilweise geschnittenen Ausschnitt aus Fig. 1 im Bereich der Kupplungseinrichtung,
- Fig. 3: einen vertikalen Schnitt durch die Spritzgießeinheit mit der Kupplungseinrichtung bei abgenommener Einspritzbrücke,
- Fig. 4: einen Schnitt nach Linie IV-IV von Fig. 3 bei verriegelter Axialverriegelung,
- Fig. 5: eine Darstellung gemäß Fig. 4 bei entriegelter Axialverriegelung,
- Fig. 6: einen vertikalen Schnitt durch Spindel und Kupplungseinrichtung bei abgenommener Antriebswelle und Förderschnecke,
- Fig. 7: eine stirnseitige Ansicht der Kupplungseinrichtung gemäß Fig. 6,
- Fig. 8: eine Explosionsdarstellung der Kupplungseinrichtung gemäß Fig. 6.

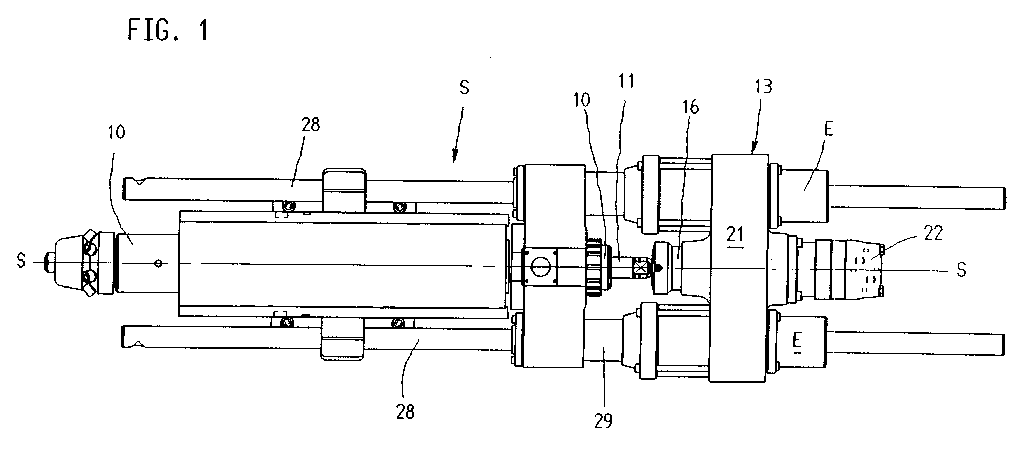

Gemäß Fig. 1 wird die Kupplungseinrichtung an einer Spritzgießeinheit S einer Kunststoff-Spritzgießmaschine eingesetzt. In einem abnehmbaren Plastifizierzylinder 10 ist eine Förderschnecke 11 angeordnet, die über einen Rotationsmotor 22 rotierbar ist. Während des Spritzbetriebs ist die Spritzgießeinheit mittels Antriebszylinder 29 axial verschiebbar, deren als Führungssäulen 28 ausgebildete Kolbenstangen am Formträger der Kunststoff-Spritzgießmaschine festgelegt sind. Die Axialbewegung der Förderschnecke 11 erfolgt über die Einspritzzylinder E. Die Einspritzzylinder E und der Rotationsmotor 22 stellen somit die Antriebseinrichtung 13 für die Bewegung der rotierbaren und axial verschiebbaren Förderschnecke 11 dar. Die Axialbewegung der Einspritzzylinder wird dabei über eine Einspritzbrücke 21, die den Rotationsmotor 22 trägt, auf die maschinenseitige Kupplung und somit bei gekuppelter Förderschnecke 11 auf die Förderschnecke übertragen.

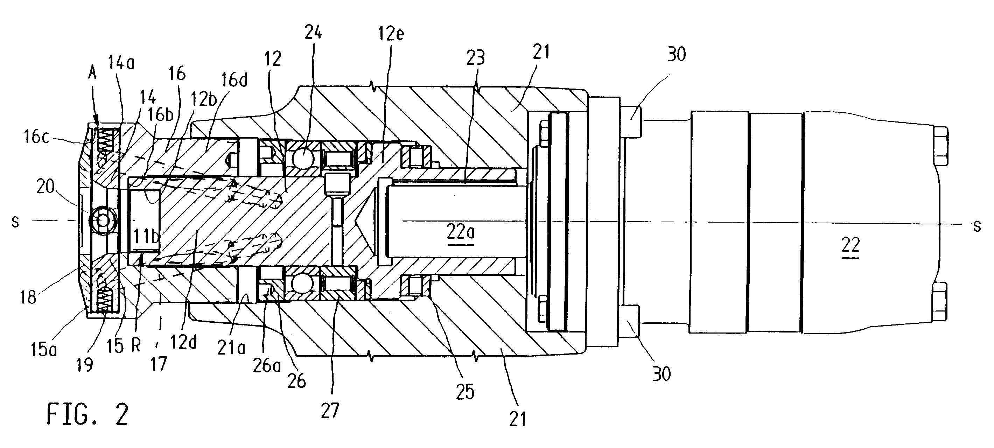

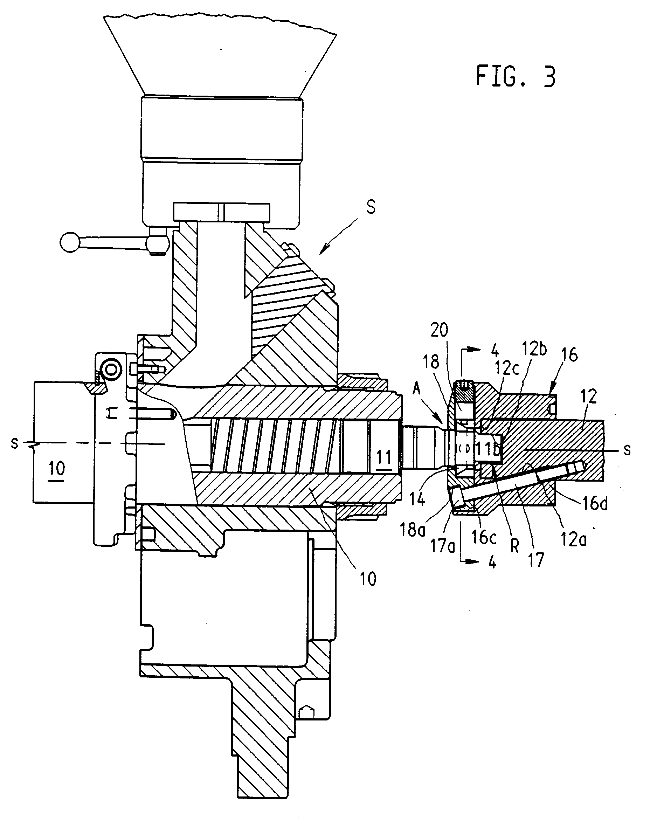

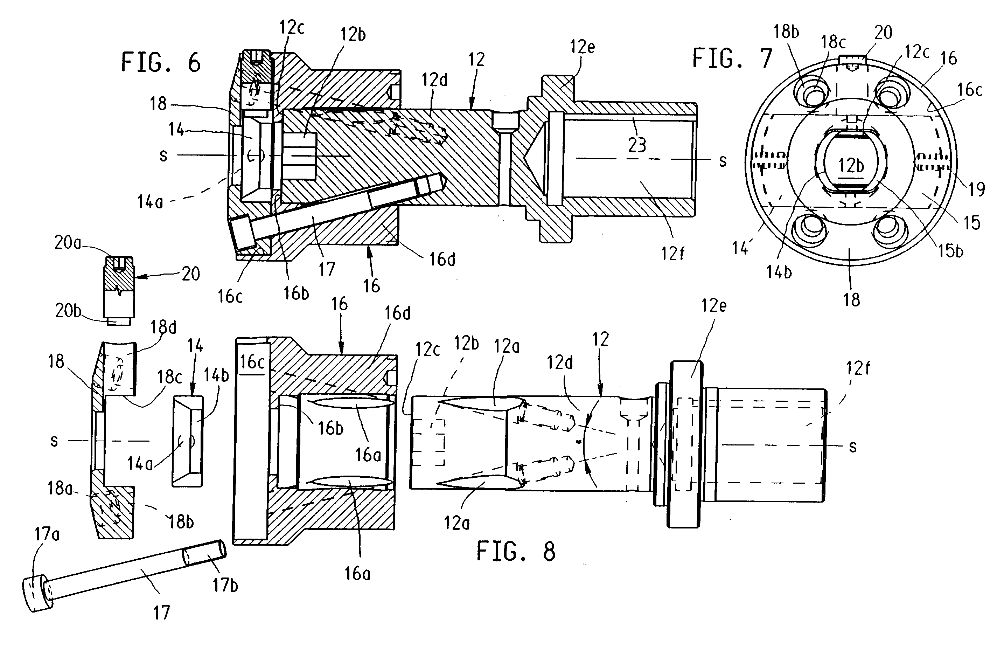

Wie aus Figur 2 ersichtlich, befindet sich die Axialverriegelung A vor der formschlüssigen, axial ausrückbaren Radialkupplung. Während die Axialverriegelung für die axiale Mitnahme der Förderschnecke sorgt, werden die von dem Rotationsmotor 22 auf eine Spindel 12 übertragenen Rotationskräfte über die Radialkupplung R auf die Förderschnecke 11 übertragen. Die ebenfalls der Rotationsbewegung unterworfene Axialverriegelung umfaßt zwei als Schieber 14,15 ausgebildete Verriegelungselemente als maschinenseitige Kupplungsteile. Die Axialverriegelung A ist in einer Aufnahme 16 aufgenommen, die über mehrere Gewindebolzen 17 lösbar mit dem Rotationsantrieb verbunden ist. Nach Figur 2 und 8 wird die Aufnahme über Gewindebolzen 17 mit Bohrungen 12a der Spindel 12 verbunden, die gegenüber einer durch die Achse s-s gelegten Ebene geneigt angeordnet sind. Wie aus Figur 8 ersichtlich, schließen die Gewindebolzen 17 in eingebauter Stellung mit der Achse s-s einen spitzen Winkel α ein und sind von außen zugänglich (Fig. 3).

Die Gewindebolzen für die Befestigung der Axialverriegelung A umschließen das maschinenseitige Kupplungsteil der Radialkupplung R, das durch eine Ausnehmung 12b an der Stirnseite der Spindel 12 gebildet ist. Die Aufnahme 16 ist dabei lediglich auf die Spindel geschoben, wobei ein radialer Innenflansch 16b als Anlage an der Stirnseite 12c der Spindel dient, um die Axialverschiebung der Aufnahme zu begrenzen. Ein Einführen der Gewindebolzen 17 in die in ihrem unteren Abschnitt ebenfalls mit einem Gewinde versehene Bohrung 12a der Spindel ist möglich, sobald gegebenenfalls nach einer vorausgegangenen Rotation der Aufnahme, die Bohrung 16a mit der Bohrung 12a fluchtet.

Die Axialverriegelung A selbst ist an der Aufnahme 16 in einer Ausnehmung 16c vorgesehen. In dieser Ausnehmung 16c wird ein Führungselement 18 durch die Gewindebolzen 17 festgelegt. Auch das Führungselement 18 besitzt Bohrungen 18b zum Durchtritt der Gewindebolzen 17 und eine vergrößerte Aufnahmebohrung 18a für die Aufnahme des Kopfes 17a der mit einem Gewindeabschnitt 17b versehenen Gewindebolzen 17.

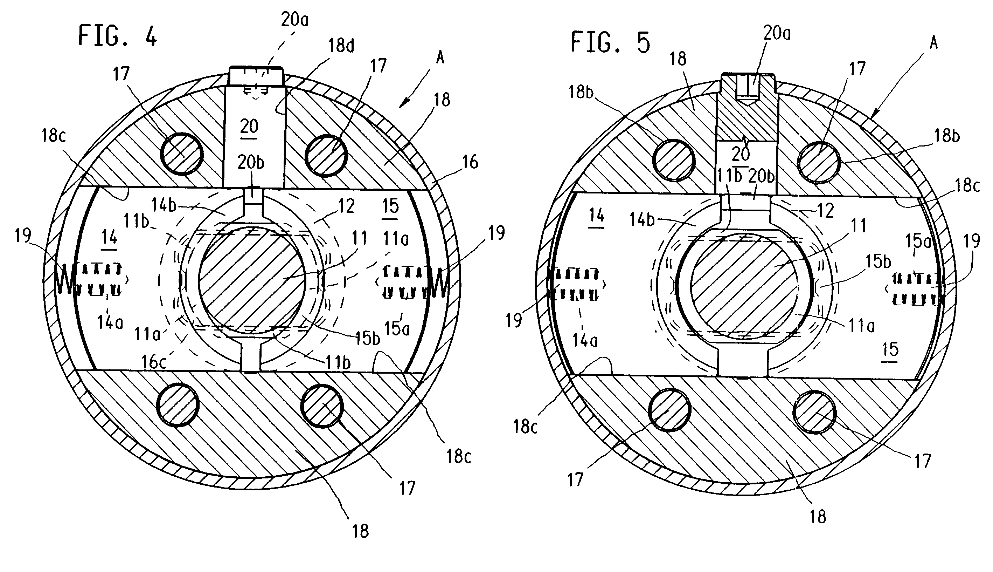

Wie insbesondere aus den Figuren 4 und 5 ersichtlich, sind im Führungselement 18 zwei diametral zur Achse s-s angeordnete Schieber 14,15 an Führungsflächen 18c geführt. Die radial verschiebbaren Schieber 14,15 sind zum axialen Kuppeln mittels Federn 19 in eine radiale Ausnehmung 11a der Förderschnecke einsteuerbar. Gleichzeitig taucht eine Kupplung 11b in die stirnseitige Ausnehmung 12b der Spindel 12 ein, um die Rotation des Rotationsmotors zu übertragen. Am Führungselement ist ferner eine Ausnehmung für einen Spreizkeil 20 vorgesehen. Der Spreizkeil besitzt eine Spreizleiste 20b, die infolge einer Drehung die beiden Schieber gegen die Kraft der Federn auseinanderspreizt, sobald der Spreizkeil über die Betätigungsöffnung 20a bewegt wird. Selbstverständlich sind auch andere Spreizelemente, wie z.B. konisch ausgebildete, radial bewegbare Spreizstifte einsetzbar und es ist auch möglich, die Betätigung des Spreizkeils zu automatisieren. Wie aus Fig. 2 ersichtlich, besitzen die Schieber 14,15 dabei Schrägkanten 14b,15b, die in entsprechende Ausnehmungen der Förderschnecke 11 eingreifen.

Die Aufnahme 16 selbst ist lediglich auf die Spindel 12 aufgesteckt und kann nach Lösen der Gewindebolzen abgenommen werden. Die schräge Anordnung der Gewindebolzen erfordert einen langen Bereich, in dem keine Gewindeverbindung möglich ist. Andererseits können auftretende Scherkräfte, die insbesondere beim Beschleunigen und Abbremsen der Förderschnecke auftreten können, somit auf eine größere Scherfläche der Gewindebolzen 17 übertragen werden.

Über einen Mitnehmer 23 überträgt die Antriebswelle 22a des Rotationsmotors 22 die Rotation auf die Spindel 12. Die Spindel besitzt in ihrem hinteren Bereich einen Radialflansch 12e, der ungefähr denselben Außendurchmesser besitzt, wie ein hinteres Ende 16d der Aufnahme 16. Der Durchmesser dieser beiden Teile ist dabei ungefähr so groß, wie der Innendurchmesser einer diese Teile aufnehmenden Bohrung 21a der Einspritzbrücke 21. Die Spindel besitzt an ihrem vorderen Abschnitt 12d einen gleichbleibenden Außendurchmesser, der ungefähr der Bohrung einer Mutter 26 entspricht, die in einen Gewindeabschnitt 21b der Bohrung mittels Betätigungsöffnungen 26a einfügbar ist. Die Mutter legt dabei einerseits die tiefer in der Bohrung 21a der Einspritzbrücke 21 angeordneten Lager 24 und 25 bei Betätigung des Gewindes fest, aufgrund ihres Anliegens an der Spindel dichtet sie aber gleichzeitig diesen Bereich gegen Verschmutzungen ab. Das Eindringen von Verschmutzungen wird aber auch durch die Übereinstimmung von Außendurchmesser der Aufnahme 16 mit Innendurchmesser der Bohrung 21a behindert.

Der Zusammenbau der Einrichtung wird am deutlichsten aus Figur 2. Zunächst wird der Rotationsmotor mittels der Bolzen 30 drehfest mit der Einspritzbrücke verbunden. Dann wird in Figur 2 von links die Spindel eingeführt, die auf der in Figur 2 rechten Seite des Radialflansches 12e bereits mit dem Lager 25 versehen ist. Über den Abschnitt 12d gleichbleibenden Durchmessers der Spindel 12 können dann Freilauf 27 und Lager 24 in der Bohrung 21a angeordnet werden, die dort durch die Mutter 26 festgelegt werden. Anschließend wird die in Figur 8 explosionsartig dargestellte Spindel zunächst mit der aufsteckbaren Aufnahme bestückt. In die Ausnehmung 16c der Aufnahme 16 wird dann die aus Führungselement 18, Schiebern 14,15 und Spreizkeil 20 bestehende Axialverriegelung A eingefügt und die Teile werden in dieser Stellung durch die Gewindebolzen 17 mit der Spindel 12 verbunden. Aus Figur 2 wird somit am leichtesten der Vorteil der einfachen Montage und Demontage der Kupplungseinrichtung deutlich.

Der angesprochene Freilauf hat dabei die Aufgabe, beim Spritzbetrieb ein Rückdrehen der Förderschnecke aufgrund der beim Einspritzen des Materials in den Formhohlraum auftretenden Widerstände zu verhindern.

## Patentansprüche

1. Kupplungseinrichtung an einer Kunststoff-Spritzgießmaschine zum Kuppeln einer beim Spritzzyklus im abnehmbaren Plastifizierzylinder (10) rotierbaren und axial verschiebbaren Förderschnecke (11) mit einer zu einer Achse (s-s) koaxialen Spindel (12) einer maschinenseitigen Antriebseinrichtung (13) zumindest mittels einer der Rotationsbewegung unterworfenen Axialverriegelung (A), deren zur maschinenseitigen Kupplung gehörigen Verriegelungselemente (Schieber 14,15) in einer der Förderschnecke (11) zugewandten Aufnahme (16) aufgenommen sind, die über Gewindebolzen (17) lösbar mit der Antriebseinrichtung verbunden ist,
dadurch gekennzeichnet, daß die Aufnahme (16) über Gewindebolzen (17) mit Bohrungen (12a) der Spindel (12) verbunden ist, die gegenüber einer durch die Achse (s-s) gelegten Ebene geneigt angeordnet sind.

2. Einrichtung nach Anspruch 1, dadurch gekennzeichnet, daß die Gewindebolzen (17) in den Bohrungen (12a) der Spindel (12) mit der Achse (s-s) einen spitzen Winkel (α) einschließen und stirnseitig von außen zugänglich sind.

3. Einrichtung nach Anspruch 1 oder 2, dadurch gekennzeichnet, daß die Gewindebolzen (17) ein aus Kupplungsrichtung hinter der Axialverriegelung (A) angeordnetes Kupplungsteil für eine formschlüssige und axial ausrückbare Radialkupplung (R) umschließen, das an einer Stirnseite der Spindel (12) durch eine Ausnehmung (12b) gebildet ist.

4. Einrichtung nach einem der vorhergehenden Ansprüche, dadurch gekennzeichnet, daß die Gewindebolzen (17) die Aufnahme (16) in Bohrungen (16a) durchgreifen, die bei auf die Spindel (12) aufgeschobener Aufnahme (16) in Einbaustellung mit den Bohrungen (12a) der Spindel (12) fluchten, wobei die Aufnahme (16) mit einem radialen Innenflansch (16b) an der Stirnseite (12c) der Spindel (12) anliegt.

5. Einrichtung nach einem der vorhergehenden Ansprüche, dadurch gekennzeichnet, daß für die Axialverriegelung (A) an der Aufnahme (16) eine Ausnehmung (16c) für ein Führungselement (18) vorgesehen ist, das durch die Gewindebolzen (17) in der Ausnehmung (16c) befestigbar ist.

6. Einrichtung nach Anspruch 5 , dadurch gekennzeichnet, daß im Führungselement (18) diametral zur Achse (s-s) angeordnete Schieber (14,15) radial verschiebbar sind, die zum axialen Kuppeln mittels Federn (19) in eine radiale Ausnehmung (11a) der Förderschnecke (11) einsteuerbar sind.

7. Einrichtung nach Anspruch 6, dadurch gekennzeichnet, daß die Schieber (14,15) mittels eines radial geführten Spreizkeils (20) außer Kupplungsstellung bringbar sind.

8. Einrichtung nach einem der vorhergehenden Ansprüche, dadurch gekennzeichnet, daß die auf die Spindel (12) aufsteckbare Aufnahme (16) sich mit ihrem hinteren Ende (16d) bis in eine Bohrung (21a) einer den Rotationsmotor (22) der Antriebseinrichtung (13) tragenden Einspritzbrücke (21) erstreckt, wobei der Außendurchmesser des hinteren Endes (16d) der Aufnahme (16) etwa dem Innendurchmesser der Bohrung (21a) der Einspritzbrücke (21) entspricht.

9. Einrichtung nach Anspruch 8 , dadurch gekennzeichnet, daß in der Bohrung (21a) der Einspritzbrücke (21) eine Mutter (26) vorgesehen ist, die einen vorderen Abschnitt (12d) gleichbleibenden Durchmessers der Spindel nahezu bündig umschließt und daß Lager (24,25) zwischen der Mutter (26) bzw. der Einspritzbrücke (21) und einem Radialflansch (12e) der Spindel (12) angeordnet sind.

## Claims

1. Coupling device for use in a plastics material injection moulding machine for coupling a feed screw (11), which is rotatable and axially displaceable in the removable plasticising cylinder during the injection cycle, to d spindle (12), which is coaxial relative to an axis (s-s), of a drive means (13) on the machine side, at least by means of an axial locking means (A) which is subject to the rotational movement, the locking members (slides 14, 15) of said means, which belong to the coupling on the machine side, being accommodated in a seat (16) facing the feed screw (11), said seat being detachably connected to the drive means via threaded bolts (17), characterised in that the seat (16) is connected to bores (12a) of the spindle (12) via threaded bolts (17), which bores are inclinedly disposed relative to a plane extending through the axis s-s.

2. Device according to claim 1, characterised in that the threaded bolts (17) in the bores (12a) of the spindle (12) form an acute angle (α) with the axis (s-s) and are accessible from outside at the front.

3. Device according to claim 1 or 2, characterised in that the threaded bolts (17) surround a coupling portion disposed at variance to the coupling direction behind the axial locking means (A) for a form-locking and axially disconnectable radial coupling (R), said coupling portion being formed by a recess (12b) on an end face of the spindle (12).

4. Device according to one of the preceding claims, characterised in that the threaded bolts (17) extend through the seat (16) into bores (16a) which are in alignment with the bores (12a) of the spindle (12) in the installed position when the seat (16) is pushed onto the spindle (12), the seat (16) abutting against the end face (12c) of the spindle (12) with a radial internal flange (16b).

5. Device according to one of the preceding claims, characterised in that a recess (16c) for a guide member (18) is provided for the axial locking means (A) on the seat (16), said guide member being securable in the recess (16c) by the threaded bolts (17).

6. Device according to claim 5, characterised in that slides (14, 15), disposed diametrically to the axis (s-s) in the guide member (18), are radially displaceable and are insertable, for the axial coupling, into a radial recess (11a) of the feed screw (11) by means of springs (19).

7. Device according to claim 6, characterised in that the slides (14, 15) can be released from the coupling position by means of a radially guided expanding key (20).

8. Device according to one of the preceding claims, characterised in that the seat (16), mountable on the spindle (12), extends with its rear end (16d) into a bore (21a) of an injection bridge (21) carrying the rotary motor (22) of the drive means (13), the external diameter of the rear end (16d) of the seat (16) corresponding substantially to the internal diameter of the bore (21a) of the injection bridge (21).

9. Device according to claim 8, characterised in that a nut (26) is provided in the bore (21a) of the injection bridge (21), said nut surrounding in a virtually flush manner a front portion (12d) of the spindle of uniform diameter, and in that bearings (24, 25) are disposed between the nut (26) or respectively the injection bridge (21) and a radial flange (12e).

## Revendications

1. Dispositif de couplage pour une machine d'injection de matière plastique pour accoupler une vis d'alimentation (11), qui est mobile en translation et en rotation au sein d'un cylindre de plastification (10) lors d'un cycle d'injection, avec un arbre (12) coaxial à l'axe (s-s) d'un dispositif d'entraînement (13) de la machine, et ceci au moins au moyen d'un verrouillage axial (A) soumis au mouvement de rotation, dont les éléments de verrouillage appartenant au couplage côté machine (tiroirs 14,15) sont reçus dans une rainure (16) agencée dans la vis d'alimentation (11), couplage axial qui est relié de manière démontable au dispositif d'entraînement au moyen de boulons filetés (17), caractérisé en ce que la pièce de réception (16) est reliée au moyen de boulons filetés (17) à des perçages (12a) de l'arbre (12), perçages qui sont agencés de manière oblique par rapport à un plan passant par l'axe (s-s).

2. Dispositif selon la revendication 1, caractérisé en ce que les boulons filetés (17) dans les perçages (12a) de l'arbre (12) forment un angle de tête (α) avec l'axe (s-s) et sont accessibles de l'extérieur par la face frontale.

3. Dispositif selon la revendication 1 ou 2, caractérisé en ce que les boulons filetés (17) entourent une pièce de couplage agencée derrière le couplage axial (A) dans le sens de couplage, pièce de couplage pour un couplage radial (R) en forme de clé et désengagée de manière axiale, pièce de couplage réalisée sous la forme d'une cavité (12b) en la face frontale de l'arbre (12).

4. Dispositif selon l'une des revendications précédentes, caractérisé en ce que les boulons filetés (17) traversent la pièce de réception (16) par des perçages (16a) qui sont alignés avec des perçages (12a) de l'arbre (12) en position d'assemblage de la pièce (16) engagée sur l'arbre (12), assemblage dans lequel la pièce de réception (16) est en appui par une paroi interne radiale (16b) contre la face frontale (12c) de l'arbre (12).

5. Dispositif selon l'une des revendications précédentes, caractérisé en ce qu'un logement (16c) pour un élément de guidage (18) est prévu dans la pièce de réception (16) pour le couplage axial (A), lequel élément de guidage est fixé dans le logement (16c) par les boulons filetés (17).

6. Dispositif selon la revendication 5, caractérisé en ce que des tiroirs (14,15) agencés dans l'élément de guidage (18) diamétralement par rapport à l'axe (s-s) sont mobiles radialement, et peuvent être engagés pour couplage axial dans une rainure radiale (11a) de la vis transporteuse (11) au moyen de ressorts (19).

7. Dispositif selon la revendication 6, caractérisé en ce que les tiroirs (14,15) peuvent être mis hors de position de couplage au moyen d'une clavette d'écartement (20) radiale.

8. Dispositif selon l'une des revendications précédentes, caractérisé en ce que la pièce de réception (16) engagée sur l'arbre (12) s'étend en son extrémité arrière (16d) jusque dans un perçage (21a) du pont d'injection (21) supportant le moteur d'entraînement rotatif (22) du dispositif d'entraînement (13), pièce de réception (16) dont le diamètre externe de la partie arrière (16d) correspond sensiblement au diamètre interne de ce perçage (21a) du pont d'injection (21).

9. Dispositif selon la revendication 8, caractérisé en ce qu'il est prévu un écrou (26) dans le perçage (21a) du pont d'injection (21) entourant presque en contact une partie frontale (12d) de diamètre constant de l'arbre, et en ce que des paliers (24,25) sont agencés entre cet écrou (26), respectivement le pont d'injection (21), et une collerette radiale (12e) de l'arbre (12).
